Europäisches Patentamt

European Patent Office

Office européen des brevets

(11) Publication number: **0 214 863**
**A2**

## EUROPEAN PATENT APPLICATION

(21) Application number: **86306915.9**

(22) Date of filing: **08.09.86**

(51) Int. Cl.⁴: **G 02 B 26/08**
**G 02 B 26/10**

(30) Priority: **06.09.85 JP 197180/85**

(43) Date of publication of application:
**18.03.87 Bulletin 87/12**

(84) Designated Contracting States: **DE FR GB IT**

(71) Applicant: **Citizen Watch Co. Ltd.**
**1-1 Nishishinjuku 2-chome**
**Shinjuku-Ku Tokyo 160 (JP)**

(72) Inventor: **Masubuchi, Sadao c/o Tech. Lab. of Citizen**
**Watch C**
**840, Aza Takeno Oaza Shimotomi**
**Tokorozawa-City Saitama (JP)**

**Suzuki, Naomichi c/o Tech. Lab. of Citizen Watch C**
**840, Aza Takeno Oaza Shimotomi**
**Tokorozawa-City Saitama (JP)**

(74) Representative: **Sturt, Clifford Mark et al**
**MARKS & CLERK 57-60 Lincoln's Inn Fields**
**London WC2A 3LS (GB)**

(54) **Light beam scanning apparatus.**

(57) The present invention provides a light beam scanning apparatus employing a resonance scanner mirror (1), in which scanning position error is substantially eliminated by utilizing only a part of the total range of angular movement of the mirror (1) to scan across the body (3) surface, and by appropriately selecting the total angle of oscillation of the mirror (1) in accordance with the amplitude of that part of the mirror (1) angular movement which is utilized for scanning.

Fig. I

EP 0 214 863 A2

## Description

### Light Beam Scanning Apparatus

The present invention relates to a light beam scanning apparatus which employs a vibrating mirror to reflect a light beam onto a body surface, to rapidly scan across that surface. In particular, the invention relates to a method for reducing errors in scanning speed and position during operation of such a light beam scanning apparatus.

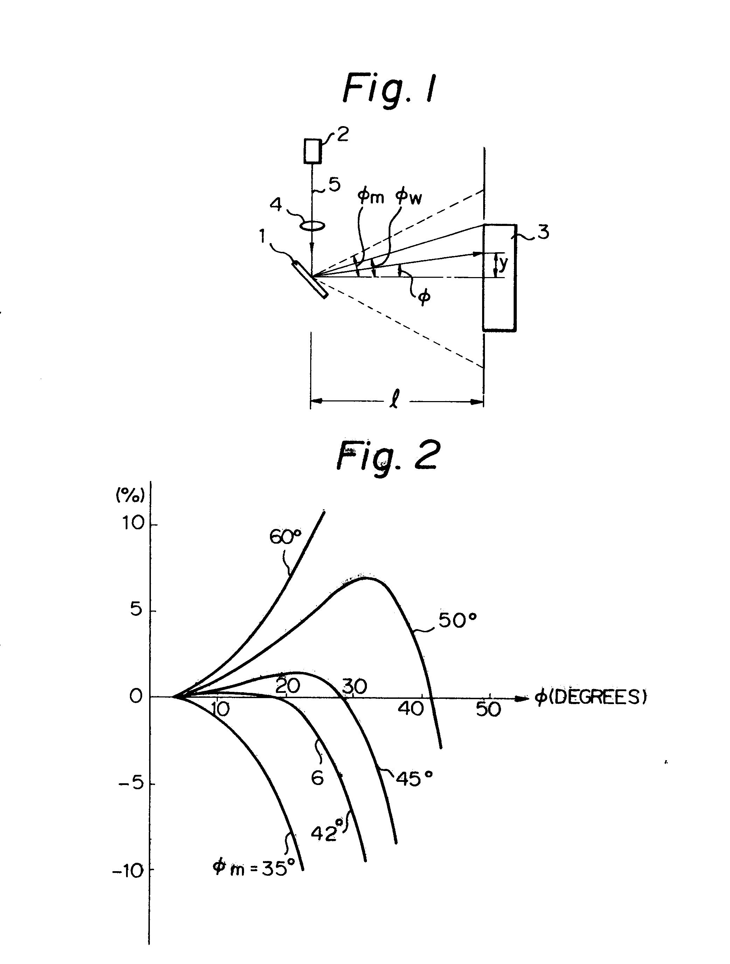

A light beam scanning apparatus of this type generally employs a resonance scanner, which causes a mirror to vibrate about a central axis. The operation of such a scanning apparatus will be discussed with reference to Fig. 1, in which a sinusoidally vibrating mirror 1 reflects a light beam 5 from a light beam source 2, after the beam has passed through a condensor lens 4. The reflected light beam falls on a surface of a body 3, at a position on that surface which will be referred to in the following as the scanning position. With such a scanning apparatus, the amount of angular deflection of the reflected light beam due to rotation of the scanning mirror 1 is equal to twice the angle of rotation of the mirror. In the following, this angular deflection of the light beam will be referred to as the scanning angle and designated as $\varphi$, so that the corresponding angle of rotation of the vibrating mirror will be equal to $\varphi/2$. This angle of rotation of the mirror obeys the relationship:

$$\frac{\varphi}{2} \propto \sin(\omega t),$$

where $\omega$ is the angular velocity of the vibrating mirror about its central axis. Thus, $\varphi$ does not vary linearly with respect to time. The resultant displacement of the light beam scanning position, which will be designated as y, is given as:

$$y \propto \tan \varphi,$$

and hence the scanning position will vary in a non-linear manner with respect to time. The amount of this non-linearity will be referred to in the following as scanning position error. The following methods have been proposed in the prior art for correction of such position error:

(1) Utilizing a correction lens disposed in the light beam path.

(2) Utilizing a data clock which has a non-regular period (e.g. for appropriate synchronization of readout of data produced as a result of scanning the light beam across the body surface).

Correction method (1) above has the disadvantage that an optical correction lens is expensive, while in addition it is necessary to position the lens to a high degree of accuracy. These factors will result in a high manufacturing cost. This method also has the disadvantage that the position of the lens may be shifted if the apparatus is subjected to vibration or shock, so that the reliability of the apparatus will be low. If correction method (2) above is used, then the data clock must utilize a high frequency, so that the component cost of the apparatus is high, and in addition it is necessary to perform temperature compensation of electronic circuit components. Moreover, the size of the required circuit board will be large, so that the overall size of the apparatus will be large.

It is an objective of the present invention to overcome these disadvantages of the prior art, by providing a light beam scanning apparatus having low manufacturing cost, high reliability, and small size.

With a light beam scanning apparatus employing a resonance scanner mirror according to the present invention, correction of scanning position error (as defined hereinabove) is achieved by utilizing only a part of the total angular movement of the mirror, for scanning across the body surface, and by selecting the maximum angle of rotation of the mirror such as to maximize the amount of mutual cancellation of factors which result in scanning position error, as described hereinafter.

More specifically, a light beam scanning apparatus according to the present invention comprises a source of a light beam, a condensor lens through which the light beam is passed, a mirror positioned to reflect the light beam emerging from the condensor lens onto a surface of a body, and resonance scanner means for vibrating the mirror sinusoidally with a fixed period of vibration for thereby scanning the light beam along a fixed scanning direction along successive positions on the body surface, in which, designating the amplitude of vibration of the mirror as $\varphi_m$(degrees) and assuming that a scanning phase angle of the light beam is zero when the light beam falls upon a predetermined median position on the body surface and that the scanning phase angle attains a value $\Theta_w$ when the light beam falls upon an outermost position on the body surface, the following relationship is satisfied:

$$-0.034 \; \Theta_w^2 + 4.37 \; \Theta_w - 95.2 \leq \varphi_m \leq 0.0264 \; \Theta_w^2 - 2.63 \; \Theta_w + 118.5$$

An embodiment of the invention will now be described by way of example only and with reference to the accompanying drawings, in which:

Fig. 1 is a general optical diagram for assistance in describing a light ebeam scanning apparaus employing a resonance scanner mirror:

Fig. 2 is a graph showing the relationship between speed of displacement of light beam scanning position and scanning angle for the light beam scanning apparatus of Fig. 1;

Fig. 3 is a graph for illustrating a deviation from linearity of the relationship between scanning position and time, for the apparatus of Fig. 1;

Fig. 4 is a graph showing the relationship between light beam scanning position error and maximum scanning angle $\varphi_m$, and;

Fig. 5 is a graph showing the relationship between position error and $\varphi_m$, and $\Theta_w$ as a parameter.

An embodiment of a light beam scanning apparatus according to the present invention will be described, referring first to Fig. 1. In Fig. 1, the light beam 5 is deflected by mirror 1 to fall on a surface of body 3 which is being scanned. Mirror 1 is periodically sinusoidally vibrated by a resonance scanner unit (not shown in drawings). When the light beam deflected by the mirror 1 falls upon a centrally situated position on a surface of body 3, mirror 1 is positioned at the median point of its sinusoidal vibration, and this will be assumed as a reference point of origin for defining scanning time points and phase angles in the following description. The light beam source 2 in Fig. 1 can be for example a laser, while the scanned body 3 can be for example a photo-sensing element, a screen, etc.

Designating the scanning angle (i.e. the angle through which the light beam 5 is deflected by the mirror 1 as the mirror rotates from the median position thereof shown in Fig. 1) as $\varphi$, the maximum angle of light beam scanning (i.e. a maximum angle through which the light beam 5 is deflected by the mirror 1 as the mirror is rotated from the median position) as $\varphi_m$, the distance between the mirror 1 of the resonance scanner and the body 3 as $\ell$, and the angular velocity of the vibrating mirror as $\omega$, the following equation is true:

$$\varphi = \varphi_m \sin(\omega t) \quad \text{......................(1)}$$

The scanning position displacement y, i.e. the change in position of incidence of the scanning light beam on the surface of body 3 resulting from deflection by the scanning angle $\varphi$ is given as:

$$y = \ell\tan\varphi = \ell\tan(\varphi_m \sin(\omega t))....(2)$$

In addition, the velocity of displacement of the scanning position is given as:

$$v = dy/dt \quad \text{......................(3)}$$

It is generally a requirement for light beam scanning that the velocity of displacement of the scanning position be constant, i.e. that the scanning position should vary linearly with respect to time.

Fig. 2 shows the relationship between deviation of velocity of displacement of scanning position v and the scanning angle $\varphi$ for the apparatus of Fig. 1, taking the maximum value of scanning angle $\varphi_m$ as a parameter. The relative deviation of this velocity v, i.e. the deviation with respect to the value of velocity when $\varphi$ is zero, is plotted along the vertical axis, while the scanning angle is plotted along the horizontal axis. The relative deviation of the velocity of displacement of scanning position attains an extremely small value when the maximum light beam scanning angle $\varphi_m$ is approximately 42°, i.e. as shown by curve 6 in Fig. 2.

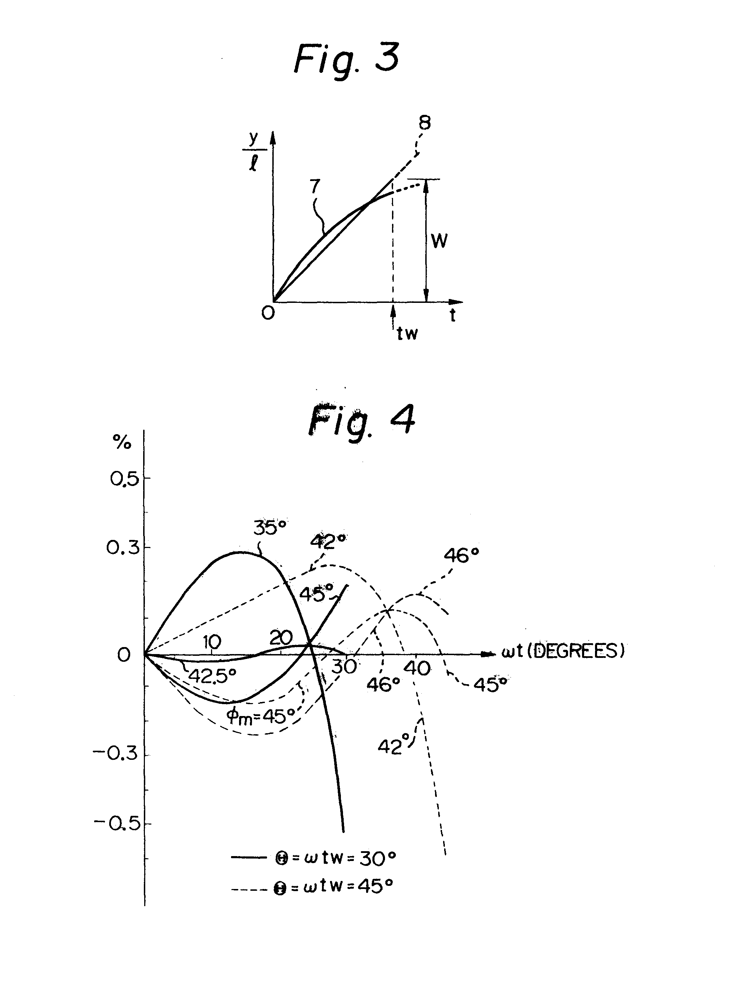

The deviation from linearity of the variation of the scanning light beam position (i.e. the position of incidence of the light beam upon the surface being scanned) with respect to time will now be examined. Referring to Fig. 3, numeral 8 denotes a linear relationship which is an ideally linear approximation to this relationship between light beam position and time, with time being plotted along the horizontal axis and light beam position (as $y/\ell$) plotted along the vertical axis. The median point of vibration of the scanning mirror, i.e. the time point at which the light beam deflected by the mirror falls upon a centrally situated position on a surface of body 3 will be taken as the time point of origin. Using equation (2) above to calculate the value of the ratio $y/\ell$, the results obtained are plotted in Fig. 3 as indicated by reference numeral 7.

The maximum angular range through which the light beam is scanned by the resonance scanner mirror is $+\varphi_m$, and the angle through which the light beam is scanned across the body 3 is $\varphi_w$, i.e. the angle through which the light beam is scanned from the median position of the scanning mirror, as defined hereinabove, until the light beam falls upon an outermost position on the surface of body 3 being scanned, i.e. the position on the body surface which is at the limit of the scanning path over the surface. The time point at which the light beam attains this outermost position will be designated as $t_w$, taking the time point at which the scanning beam is at the median position thereof (i.e. when mirror 1 is in the central position shown in Fig. 1) as the time origin. The relationship between the scanning angle $\varphi_w$ and time point $t_w$ is given as follows:

$$t_w = (1/\omega) \sin^{-1}(\varphi_w/\varphi_m)..........(4) \quad \cdot$$

The value of $y/\ell$ for the straight line aproximation 8 at time point $t_w$ will be designated as w, as shown in Fig. 3.

Fig. 4 is a graphical diagram to show deviations from linearity of the relationship between light beam scanning position and time, for different values of the maximum scanning angle $\varphi_m$ (i.e. the maximum angle by which the scanning beam is deflected from the median position thereof, as illustrated in Fig. 1), and for two different values of the mirror vibration phase angle (i.e. the scanning light beam phase angle, expressed as $\omega t$, where $\omega$ is the velocity of angular rotation of the vibrating mirror) at the time point when the scanning angle becomes $\varphi_w$, this specific phase angle being designated as $\Theta_w$. The values of $\omega \times t$ ( = scanning phase angle) are plotted along the horizontal axis, and values of deviation of $y/\ell$ (i.e. of the curve 7 shown in Fig. 3) from the straight line approximation (i.e. line 8 in Fig. 3) are plotted along the vertical axis, standardized with respect to w, i.e. values of relative deviation are plotted along the vertical axis. The curves are plotted with $\varphi_m$ as a parameter, with values for the case of $\Theta_w = \omega t_w = 30°$ being indicated by the full-line curves, and values for the case of $\Theta_w = \omega t_w = 45°$ being indicated by the broken-line curves. With $\Theta_w = 30°$ and $\varphi_m = 42.5°$, the relative deviation from linearity is at a minimum, while if $\varphi_m$ is either increased or decreased from this value, the relative deviation will increase. The minimum value of relative deviation is obtained for the case of $\Theta_w = 45°$ and $\varphi_m = 45°$.

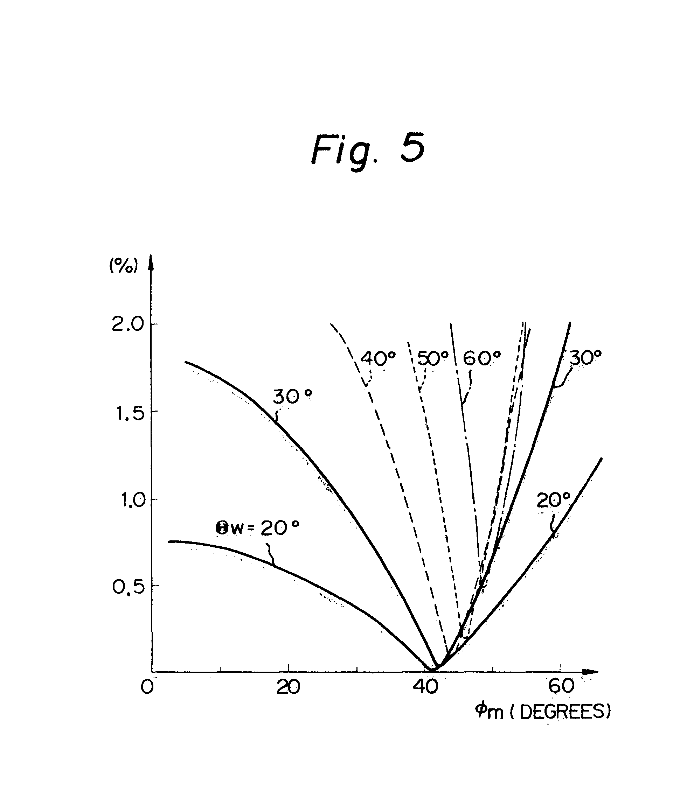

Fig. 5 shows the relationship between values of $\Theta_w$ and $\varphi_m$ which minimize the relative deviation i.e. which minimize the positional error. The maximum values of relative deviation (i.e. the values of relative deviation which occur when the light beam is scanning an outermost position on the surface being scanned) for each condition of $\varphi_m$, $\Theta_w$, are plotted along the vertical axis.

As a practical test of the present invention, a light beam scanning apparatus according to the present invention was applied to a laser beam printer. It was found that if A4 paper is used for printing, and if the value of the relative deviation described above is varied while sample characters are printed. then the print quality deteriorates significantly when the relative deviation exceeds 2%.

Table 1 below shows values of $\Theta_w$ and corresponding values of $\varphi_1$, where $\varphi_1$ denotes low values of $\varphi_m$ for which the relative deviation will remain within 2%, corresponding values of $\varphi_3$, where $\varphi_3$ denotes high values of $\varphi_m$ for which the relative deviation will remain within 2%, and $\varphi_2$, where $\varphi_2$ denotes values of $\varphi_m$ such that the relative deviation attains a minimum.

### Table 1

| $\Theta_w$ (°) | $\varphi_1$ (°) | $\varphi_2$ (°) | $\varphi_3$ (°) |
|---|---|---|---|
| 20 | – | 41 | 77 |
| 30 | | 42.5 | 62 |
| 35 | 15 | | |
| 40 | 26 | 44 | 55.5 |
| 50 | 36.5 | 46 | 54 |
| 60 | 43.5 | 48.5 | 55 |

The relationships between $\Theta_w$ and $\varphi_1$, and the relationship between $\Theta_w$ and $\varphi_3$ shown in Table 1 above can be respectively approximated by the the following second-order functions:

$$\varphi_1 = -0.034 \, \Theta_w^2 + 4.37 \, \Theta_w - 95.2$$
$$\varphi_3 = 0.0264 \, \Theta_w^2 - 2.63 \, \Theta_w + 118.5$$

The condition for holding the relative deviation within 2% is as follows:

$$\varphi_1 \leqq \varphi_m \leqq \varphi_3$$

In addition, the relationship between $\varnothing_m$ and $\Theta_w$ such that the relative deviation is minimized is approximately as follows:

$$\Theta_w = 0.2 \, \varphi_m + 36$$

As will be clear from the above description, a light beam scanning apparatus according to the present invention enables position errors to be eliminated without the need for utilizing an optical correction lens or a non-periodic data clock circuit. Thus the invention enables the production of a light beam scanning apparatus having low cost, high reliability, and small size.

Although the present invention has been described in the above with reference to a specific embodiment, it should be noted that various changes and modifications to the embodiment may be envisaged, which fall within the scope claimed for the invention as set out in the appended claims. The above specification should therefore be interpreted in a descriptive and not in a limiting sense.

## Claims

1. A light beam scanning apparatus comprising a source (2) of a light beam (5); a condensor lens (4) through which said light beam is passed, a mirror (1) positioned to reflect said light beam (5) emerging from said condensor lens (4) onto a surface of a body (3), and resonance scanner means for vibrating said mirror (1) sinusoidally with a fixed period of vibration for thereby scanning said light beam (5) along a fixed scanning direction over successive positions on said body (3) surface, characterised in that, designating the amplitude of said sinusoidal vibration of said mirror (1) as $\varphi_m$ (degrees) and assuming that a scanning phase angle of said light beam (5) is zero when said light beam (5) falls upon a central position on said body (3) surface and that said scanning phase angle attains a value $\Theta_w$ (degrees) when said light beam (5) falls upon an outermost position on said body (3) surface, the following relationship is satisfied:

$$-0.034 \, \Theta_w^2 + 4.37 \, \Theta_w - 95.2 \leqq \varphi_m \leqq 0.0264 \, \Theta_w^2 - 2.63 \, H_w + 118.5$$

# Fig. 1

# Fig. 2

# Fig. 3

# Fig. 4

Fig. 5